(19) Europäisches Patentamt
European Patent Office
Office européen des brevets

(11) Veröffentlichungsnummer : **0 106 234**
**B1**

(12) **EUROPÄISCHE PATENTSCHRIFT**

(45) Veröffentlichungstag der Patentschrift : **28.05.86**

(51) Int. Cl.⁴ : **C 10 L 1/22**, E 21 B 41/02, C 23 F 11/14

(21) Anmeldenummer : **83109734.0**

(22) Anmeldetag : **29.09.83**

# (54) Verwendung von Aminsalzen von Maleinamidsäuren als Inhibitoren gegen die Korrosion von CO2 und H2S in Wasser-in-Öl-Emulsionen.

(30) Priorität : **07.10.82 DE 3237109**

(43) Veröffentlichungstag der Anmeldung : **25.04.84 Patentblatt 84/17**

(45) Bekanntmachung des Hinweises auf die Patenterteilung : **28.05.86 Patentblatt 86/22**

(84) Benannte Vertragsstaaten : **DE FR GB**

(56) Entgegenhaltungen :
**EP-A- 0 065 191**
**EP-B- 0 002 780**
**DE-B- 1 149 843**
**FR-A- 2 427 400**

(73) Patentinhaber : **BASF Aktiengesellschaft**
**Carl-Bosch-Strasse 38**
**D-6700 Ludwigshafen (DE)**

(72) Erfinder : **Oppenlaender, Knut, Dr.**
**Otto-Dill-Strasse 23**
**D-6700 Ludwigshafen (DE)**
Erfinder : **Stork, Karl, Dr.**
**Reutersgarten 1**
**D-6840 Lampertheim (DE)**
Erfinder : **Barthold, Klaus, Dr.**
**Paulusbergstrasse 4**
**D-6800 Mannheim 51 (DE)**

**EP 0 106 234 B1**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue St-Denis, 75001 Paris, France

**Beschreibung**

Die Erfindung betrifft die Verwendung bestimmter Aminsalze von Maleinamidsäuren in Mischung mit bestimmten Aminen oder Amidsäuren als Inhibitoren, die gegen die Korrosion durch $CO_2$ und $H_2S$ (« Sauergas ») beim Transport und Lagern von Rohölen, die im allgemeinen als Wasser, insbesondere Salzwasser-in-Öl-Emulsionen vorliegen, wirken.

Es ist bekannt und geübte Praxis, bei der Ölförderung, dem Transport und der Lagerung des Öls durch Injizieren eine Lösung oder Dispersion von Korrossionsinhibitoren in das Öl einzubringen, so daß sich auf der Oberfläche der mit dem Öl in Berührung kommenden Metallteile eine Schutzschicht ausbildet.

Für diese Zwecke sind bisher bestimmte Imidazolinsalze vorgeschlagen worden (DE-A 28 46 979), die aber gerade gegen $H_2S$ und $CO_2$ noch nicht genügend wirksam sind.

Aus der DE-C 11 49 843 sind bestimmte Malein- oder Bernsteinsäurehalbamide oder Aminsalze davon als Zusatzmittel für Brennstoffe und Schmieröle bekannt, die gegen Sedimentbildung, Siebverstopfung und Rosten, z. B. in Rohrleitungen, wirksam sind. Sie wirken somit antikorrosiv gegen Sauerstoff. Hinweise darauf, daß diese Verbindungen auch gegen die Korrosion wirksam sind, die durch $H_2S$ und $CO_2$ in Wasser-in-Öl-Emulsionen hervorgerufen wird, finden sich in der genannten Publikation nicht.

Das Ziel der vorliegenden Erfindung, noch bessere Inhibitoren gerade gegen die letztgenannte Korrosionsform, Korrosion durch $H_2S$ und $CO_2$ in Wasser-in-Öl-Emulsionen, zu finden, wurde mit Aminsalzen von Maleinamidsäuren der Formel I

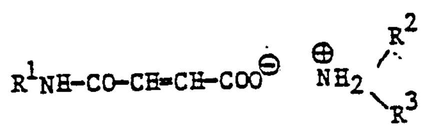

(I)

erreicht, in der $R^1$ und $R^2$ gleich oder verschieden sind und $C_8$- bis $C_{18}$-Alkyl- oder Alkenylreste bedeuten und $R^3$ für Wasserstoff, einen $C_1$- bis $C_{18}$-Alkyl- oder einen $C_2$- bis $C_{18}$-Alkenylrest steht, wobei diese Aminsalze in Mischung mit Aminen der Formel II

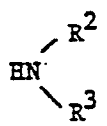

(II)

oder Amidsäuren der Formel III

$$R^1NH—CO—CH=CH—COOH \quad (III)$$

worin $R^1$, $R^2$ und $R^3$ die vorstehenden Bedeutungen besitzen, und jeweils das Molverhältnis Aminsalz zu Amin und Aminsalz zu Amidsäure bis 1 : 2 beträgt, vorliegen.

Dieser Befund ist überraschend, wenn man sich vergegenwärtigt, daß Korrosionen durch Sauerstoff mit Korrosionen durch $CO_2$ und $H_2S$ nicht vergleichbar sind, und deshalb auch verschiedenartige Inhibitoren zu ihrer Bekämpfung notwendig sind.

Die den erfindungsgemäß zu verwendenden Salzen zugrundeliegenden Maleinamidsäuren erhält man in an sich bekannter Weise durch Umsetzung von Maleinsäureanhydrid mit einem primären $C_8$- bis $C_{18}$-Alkyl- oder Alkenylamin im Molverhältnis 1 : 1 bei 70 bis 100 °C. Als primäre Amine kommen alle innerhalb dieser Grenzen definierten Amine in Betracht, z. B. geradkettiges oder verzweigtes Octyl-, Nonyl-, Decyl-, Undecyl-, Dodecyl-, Tridecyl-, Tetradecyl-, Pentadecyl-, Hexadecyl-, Heptadecyl-, Octadecylamin, die jeweiligen entsprechenden Alkenylamine, sowie Gemische dieser Amine. Besonders bevorzugt, da am besten zugänglich, sind n-Octylamin, Tridecylamin und Octadecylamin.

Die erhaltenen Amidsäuren der definitionsgemäßen Formel III

$$R^1—NH—CO—CH=CH—COOH \quad (III)$$

werden anschließend mit primären oder sekundären Aminen der Formel II

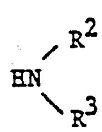

(II)

bei 70 bis 100 °C zu den Aminsalzen der Formel I umgesetzt, wobei $R^2$ und $R^3$ die obengenannte Bedeutung besitzen.

Als Amine der Formel II können alle obengenannten zur Herstellung der Amidsäure geeigneten primären Amine eingesetzt werden ($R^3$ = H). Außerdem können sekundäre Amine zum Einsatz gelangen, bei denen $R^3$ einen $C_1$- bis $C_{18}$-Alkyl- oder $C_2$- bis $C_{18}$-Alkenylrest bedeutet. Vorzugsweise wählt man in diesem Falle jedoch, wegen der besseren Zugänglichkeit solche Amine, bei denen $R^2$ und $R^3$ identisch sind, d. h. jeweils die gleichen $C_8$-$C_{18}$-Alkyl- oder Alkenylgruppen gebunden enthalten. Hierbei sind ebenfalls alle $C_8$- bis $C_{18}$-Dialkyl- oder Dialkenylamine wie geradkettiges oder verzweigtes Dioctyl-, Dinonyl-, Didecyl-, Diundecyl-, Didodecyl-, Ditridecyl-, Ditetradecyl-, Dipentadecyl-, Dihexadecyl-, Diheptadecyl- oder Dioctadecylamin oder deren Gemische einsetzbar. Technisch von besonderem Interesse sind Dioctyl-, Ditridecyl- und Dioctadecylamin.

Die Umsetzung erfolgt zweckmäßigerweise in einem Molverhältnis Maleinamidsäure zu Amin von 1 : 1.

Falls das dem Salz zugrundeliegende Amin ein primäres Amin darstellt und mit dem zur Herstellung der Amidsäure zugrundeliegenden identisch ist ($R^2 = R^1$, $R^3$ = H), so kann die Herstellung der Salze in einer Stufe erfolgen, d. h. man setzt dann Maleinsäureanhydrid mit dem gewünschten Amin bei 70 bis 100 °C im Molverhältnis 1 : 2 um.

Die erhaltenen Aminsalze sind an sich bereits ausgezeichnete Inhibitoren gegen die durch $H_2S$ und $CO_2$ hervorgerufene Korrosion in Wasser-in-Öl-Emulsionen, insbesondere in Salzwasser-in-Öl-Emulsionen, eine in manchen Fällen gesteigerte Wirkung erhält man aber erfindungsgemäß, wenn den Salzen der Amidsäure noch die entsprechenden freien Amine der Formel II zugemischt sind. Solche Mischungen erhält man zweckmäßigerweise durch Umsetzung der freien Maleinamidsäure mit überschüssigen Mengen an Amin. Der überschuß kann so groß sein, daß das Molverhältnis Maleinamidsäure zu Amin vorzugsweise bis 1 : 3 beträgt, was im fertigen Aminsalz/Amin-Gemisch einem Molverhältnis Aminsalz zu Amin bis 1 : 2 entspricht. Wenn das für die Salzbildung verwendete Amin mit dem zur Herstellung der Amidsäure zugrundeliegenden identisch ist ($R^2 = R^1$, $R^3$ = H), kann man Maleinsäureanhydrid direkt mit einem entsprechenden Überschuß an primärem Amin umsetzen, wobei das Molverhältnis Maleinsäureanhydrid zu Amin vorzugsweise bis 1 : 4 beträgt. Dies entspricht im fertigen Gemisch wiederum einem Molverhältnis Aminsalz zu Amin bis 1 : 2.

Steigerungen der Wirkung können auch eintreten, wenn den Aminsalzen noch zusätzlich freie Maleinamidsäure der Formel III zugemischt wird, wobei die zusätzliche Maleinamidsäure von der, den Aminsalzen zugrundeliegenden Maleinamidsäuren verschieden sein kann. Vorzugsweise werden jedoch identische Maleinamidsäuren zugesetzt. Das Molverhältnis Aminsalz zu Maleinamidsäure beträgt vorzugsweise bis 1 : 2.

Wenn man dem Aminsalz/Amin-Gemisch noch zusätzlich Maleinamidsäure zumischt, erhält man in manchen Fällen ebenfalls eine Steigerung der Inhibitorwirkung, obwohl rein formal gesehen, dabei entweder wieder das reine Aminsalz oder eines der o. g. Gemische entstehen sollte.

Die erfindungsgemäß zu verwendenden Mischungen können direkt dosiert oder vorzugsweise (zur besseren Dosierung) mit einem Lösungsmittel, wie Xylol oder Toluol, gebrauchsfertig verdünnt werden.

Den Inhibitoren können im übrigen noch andere, bisher bekannte Inhibitoren, wie Umsetzungsprodukte aus Ölsäure und Diethylentriamin zugemischt werden, was in manchen Fällen verbesserte Effekte ergibt.

Die so erhaltenen Inhibitoren bieten einen ausgezeichneten Schutz gegen $H_2S$- und $CO_2$-Korrosion. Man setzt sie je nach Provenienz bzw. Zusammensetzung der Rohölemulsion — bezogen auf die Emulsion — in Mengen von 10 bis 1 000 ppm zu.

Die nun folgenden Beispiele erläutern die Erfindung.

## Beispiele

Zur Prüfung der Inhibitorkompositionen wurde ein dynamischer Test (sog. « Wheel-Test ») durchgeführt, eine Methode, womit die Korrosionsinhibitoren für die Erdöl- und Erdgasförderung getestet werden.

Als Testcoupons wurden Stahlbleche der Abmessungen 130 mm × 10 mm × 1 mm gewählt. Diese Blechstreifen wurden geschmirgelt, mit Toluol entfettet und gewogen. Als Testmedium diente Testbenzin, das Salzwasser mit 3 Gew.% NaCl — bezogen auf Wasser — emulgiert enthielt. Die Emulsion enthielt 50 Gew.% Salzwasser und war mit $H_2S + CO_2$ gesättigt.

Dann wurden 250 ppm — bezogen auf das Gewicht der Emulsion — an Inhibitor zugesetzt.

Die entfetteten und gewogenen Bleche wurden anschließend in die Emulsionen eingebracht und bei 80 °C 16 Stunden einer mechanischen Bewegung (40 Upm mittels einer die Testgefäße drehenden Welle) unterzogen.

Die Testblechstreifen wurden anschließend mit einer inhibierten Säure gereinigt, entfettet und nach Trocknung zur Bestimmung des Gewichtsverlustes gewogen. Die Auswertung erfolgte im Vergleich zum Blindwert (Versuch ohne Inhibitorzusatz).

Aus den Ergebnissen der Wägungen wurde die Geschwindigkeit der Korrosion und daraus der prozentuale Korrosionsschutz Z errechnet :

$$Z = \frac{G_0 - G_1}{G_0} \cdot 100\ [\%]$$

wobei $G_0$ die Geschwindigkeit der Korrosion ohne Inhibitor und $G_1$ die Geschwindigkeit mit Inhibitor bedeuten.

Die Ergebnisse sind aus den folgenden Tabellen ersichtlich :

Tabelle

$$R^1\text{-NH-}\overset{O}{\overset{\|}{C}}\text{-CH=CH-COO}^{\ominus} \quad \overset{\oplus}{H_2N}\begin{matrix} \diagup R^2 \\ \diagdown R^3 \end{matrix}$$

Dosierung : 100 ppm

| Beispiel | $R^1$ | $R^2$ | $R^3$ | Korrosionsschutz Z [%] bei Korrosion von $CO_2$ | $H_2S$ | $CO_2/H_2S$ (1:1 (Gew)) |
|---|---|---|---|---|---|---|
| 1 | $C_{13}H_{27}$ | $C_{13}H_{27}$ | H | 94 | 78 | 85 |
| 2 | " | " | $C_{13}H_{27}$ | 89 | 75 | 81 |
| 3 | " | $C_{18}H_{35}$ | H | 86 | 72 | 79 |
| 4 | $C_{18}H_{35}$ | $C_{18}H_{35}$ | H | 92 | 76 | 83 |
| 5 | " | $C_{13}H_{27}$ | H | 90 | 79 | 82 |
| 6 | " | $C_8H_{17}$ | H | 82 | 71 | 75 |
| 7 | " | " | $C_8H_{18}$ | 80 | 67 | 78 |
| 8 | " | $C_{13}H_{27}$ | $C_{13}H_{27}$ | 78 | 66 | 76 |
| 9 | " | $C_{18}H_{37}$ | $C_{18}H_{37}$ | 72 | 66 | 76 |
| 10 | $C_8H_{17}$ | $C_8H_{17}$ | H | 72 | 61 | 69 |
| 11 | " | " | $C_8H_{17}$ | 75 | 68 | 70 |
| 12 | " | $C_{13}H_{27}$ | H | 78 | 72 | 75 |
| 13 | " | " | $C_{13}H_{27}$ | 82 | 75 | 76 |
| 14 | " | $C_{18}H_{35}$ | H | 79 | 72 | 78 |
| 15 | $C_{13}H_{27}$ | $C_8H_{17}$ | H | 82 | 69 | 72 |
| 16 | " | " | $C_8H_{17}$ | 84 | 68 | 72 |
| 17 | " | $C_{18}H_{37}$ | $C_{18}H_{37}$ | 80 | 74 | 79 |

Vergleichsbeispiel nur mit $R^1\text{-NH-}\overset{O}{\overset{\|}{C}}\text{-CH=CH-COOH}$

| | $R^1$ = | | | | |
|---|---|---|---|---|---|
| a | | $C_{13}H_{27}$ | 71 | 10 | 35 |
| b | | $C_8H_{17}$ | 42 | 0 | 0 |
| c | | $C_{18}H_{35}$ | 67 | 15 | 12 |

**Patentanspruch**

Verwendung von Aminsalzen von Maleinamidsäuren der Formel I

$$R^1\text{NH-CO-CH=CH-COO}^{\ominus} \quad \overset{\oplus}{H_2N}\begin{matrix} \diagup R^2 \\ \diagdown R^3 \end{matrix} \qquad (I)$$

in der $R^1$ und $R^2$ gleich oder verschieden sind und $C_8$- bis $C_{18}$-Alkyl- oder Alkenylreste bedeuten und $R^3$

für Wasserstoff, einen $C_1$- bis $C_{18}$-Alkyl- oder einen $C_2$- bis $C_{18}$-Alkenylrest steht, als Inhibitoren gegen die durch $H_2S$ und $CO_2$ hervorgerufene Metallkorrosion in Wasser-in-Öl-Emulsionen,
in Mischung mit Aminen der Formel II

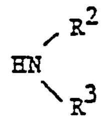

(II)

oder Amidsäuren der Formel III

$$R^1NH—CO—CH=CH—COOH \quad (III)$$

wobei $R^1$, $R^2$ und $R^3$ die oben genannten Bedeutungen besitzen, und jeweils das Molverhältnis Aminsalz zu Amin und Aminsalz zu Amidsäure bis 1 : 2 beträgt.

**Claim**

The use of amine salts of maleamic acids of the formula I

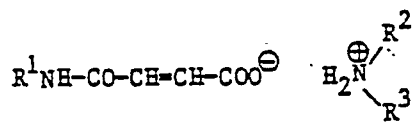

(I)

where $R^1$ and $R^2$ are identical or different and each denotes alkyl or alkenyl of 8 to 18 carbon atoms, and $R^3$ is hydrogen, alkyl of 1 to 18 carbon atoms or alkenyl of 2 to 18 carbon atoms, as agents for inhibiting the corrosion of metal brought about by $H_2S$ and $CO_2$ in water-in-oil emulsions,
in admixture with amines of the formula II

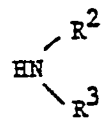

(II)

or amide acids of the formula III

$$R^1NH—CO—CH=CH—COOH \quad (III)$$

$R^1$, $R^2$ and $R^3$ having the above meanings, and the molar ratios of amine salt to amine and of amine salt to amide acid each being up to 1 : 2.

**Revendication**

Utilisation de sels d'amines d'acides maléamiques de formule I

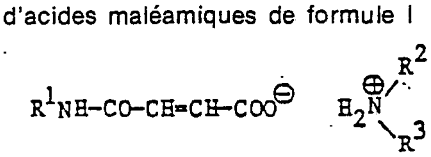

(I)

dans laquelle $R^1$ et $R^2$ sont semblables ou différents et représentent des radicaux alkyle ou alcényle en $C_8$ à $C_{18}$ et $R^3$ est mis pour un atome d'hydrogène, un radical alkyle en $C_1$ à $C_{18}$ ou un radical alcényle en $C_2$ à $C_{18}$, comme inhibiteurs contre la corrosion de métaux provoquée par $H_2S$ et $CO_2$ dans des émulsions eau-dans-huile,
en mélange avec des amines de formule II

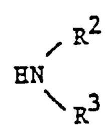

(II)

ou des acides-amides de formule III

$$R^1NH—CO—CH=CH—COOH \quad (III)$$

$R^1$, $R^2$ et $R^3$ ayant la signification donnée ci-dessus et le rapport molaire du sel d'amine à l'amine ou du sel d'amine à l'acide-amide s'élevant jusqu'à 1 : 2.